(19) Europäisches Patentamt / European Patent Office / Office européen des brevets

(11) **EP 4 517 661 A1**

(12) **EUROPEAN PATENT APPLICATION**
published in accordance with Art. 153(4) EPC

(43) Date of publication:
**05.03.2025 Bulletin 2025/10**

(21) Application number: **23830522.1**

(22) Date of filing: **30.06.2023**

(51) International Patent Classification (IPC):
**G06T 7/33** (2017.01)

(52) Cooperative Patent Classification (CPC):
**G06T 7/00; G06T 7/33; G06V 10/74; Y02T 10/40**

(86) International application number:
**PCT/CN2023/105062**

(87) International publication number:
**WO 2024/002360 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.06.2022 CN 202210758534**

(71) Applicant: **Wuhan United Imaging Surgical Co., Ltd.**
**Wuhan, Hubei 430206 (CN)**

(72) Inventors:
• **WU, Bo**
  **Wuhan, Hubei 430206 (CN)**
• **CAO, Le**
  **Wuhan, Hubei 430206 (CN)**
• **LIU, Shuanglong**
  **Wuhan, Hubei 430206 (CN)**

(74) Representative: **Murgitroyd & Company**
  **165-169 Scotland Street**
  **Glasgow G5 8PL (GB)**

(54) **REGISTRATION METHOD AND APPARATUS, AND COMPUTER DEVICE AND READABLE STORAGE MEDIUM**

(57) The present application relates to a registration method and apparatus, and a computer device and a readable storage medium. The method comprises: acquiring a first image model of an object to be registered, which is used in previous registration, and a first conversion matrix, which is obtained in the previous registration; for the current registration, adjusting the first image model on the basis of the first conversion matrix, so as to obtain a second image model; projecting a first registration point set on the surface of said object onto the surface of the second image model, so as to obtain a projection point set; and registering the first registration point set and the projection point set, so as to obtain a second conversion matrix.

Obtain a first image model of an object to be registered used in a previous registration and a first transformation matrix obtained in the previous registration ⌐200

For a current registration, adjust, based on the first transformation matrix, the first image model to obtain a second image model ⌐210

Project a first registration point set on a surface of the object to be registered onto a surface of the second image model to obtain a projection point set ⌐220

Register the first registration point set with the projection point set to obtain a second transformation matrix ⌐230

FIG. 2

EP 4 517 661 A1

# Description

## CROSS-REFERENCE TO RELATED APPLICATIONS

The present disclosure claims priority to Chinese patent application No. 202210758534.5, titled "REGISTRATION METHOD AND APPARATUS, AND COMPUTER DEVICE AND READABLE STORAGE MEDIUM", filed on June 30, 2022, the entire content of which is incorporated herein by reference.

## TECHNICAL FIELD

The present disclosure relates to the technical field of medical image processing, and more particularly, to a registration method and apparatus, a computer device and a readable storage medium.

## BACKGROUND

With the increase in average life expectancy and the acceleration of the aging process of the population, an incidence rate of orthopedic disease is also increasing, and a demand for orthopedic surgery is increasing year by year. During the operation, it is necessary to ensure that a three-dimensional (3D) model of a bone corresponds to a real bone of an object to be registered.

## SUMMARY

The present disclosure provides a registration method and apparatus, a computer device and a readable storage medium.

In a first aspect, an embodiment of the present disclosure provides a registration method. The method includes: obtaining a first image model of an object to be registered used in a previous registration and a first transformation matrix obtained in the previous registration; performing a current registration, including: adjusting, based on the first transformation matrix, the first image model to obtain a second image model; projecting a first registration point set on a surface of the object to be registered onto a surface of the second image model to obtain a projection point set; and registering the first registration point set with the projection point set to obtain a second transformation matrix.

In an embodiment, projection points in the projection point set are projection points having closest distances to corresponding registration points in the first registration point set respectively.

In an embodiment, registering the first registration point set with the projection point set to obtain the second transformation matrix includes: determining, based on pose coordinates of respective registration points in the first registration point set and pose coordinates of respective projection points in the projection point set, the second transformation matrix. In an embodiment, determining, based on the pose coordinates of the registration points in the first registration point set and the pose coordinates of the projection points in the projection point set, the second transformation matrix includes: substituting the pose coordinates of the registration points in the first registration point set, and the pose coordinates of the projection points in the projection point set as known quantities into a first objective function, and substituting the second transformation matrix as an unknown quantity into the first objective function, to solve the second transformation matrix. The first objective function is configured to minimize a pose difference between a first transformation point set and the first registration point set, and the first transformation point set is obtained by transforming the projection point set based on the second transformation matrix.

In an embodiment, registering the first registration point set with the projection point set to obtain the second transformation matrix includes: obtaining registration weights corresponding to respective registration points in the first registration point set; for each registration point in the first registration point set, the registration weight being obtained based on at least one of a registration number of the current registration, a preset registration number, and a pose difference between the registration point and a projection point corresponding to the registration point; and substituting the registration weights corresponding to the respective registration points in the first registration point set, pose coordinates of the registration points in the first registration point set, and pose coordinates of respective projection points in the projection point set as known quantities into a second objective function, and substituting the second transformation matrix as an unknown quantity into the second objective function, to solve the second transformation matrix. The second objective function is configured to minimize a pose difference between a first transformation point set and the first registration point set, and the first transformation point set is obtained by transforming the projection point set based on the second transformation matrix.

In an embodiment, respective registration points in the first registration point set are physiological and anatomical feature points on the surface of the object to be registered, and after registering the first registration point set with the projection point set to obtain the second transformation matrix, the registration method further includes: determining whether the registration number of the current registration reaches a first iteration number threshold; and if the registration number of the current registration does not reach the first iteration number threshold, taking the second image model as the first image model, taking the second transformation matrix as the first transformation matrix, and returning to perform the step of adjusting, based on the first transformation matrix, the first image model to obtain the second image model.

In an embodiment, the registration method further includes: if the registration number of the current registration reaches the first iteration number threshold, taking the second image model as the first image model, taking the second transformation matrix as the first transformation matrix, taking a second registration point set on the surface of the object to be registered as the first registration point set, and returning to perform the step of adjusting, based on the first transformation matrix, the first image model to obtain the second image model, until the registration number of the current registration reaches a second iteration number threshold. Respective registration points in the second registration point set are points other than the physiological and anatomical feature points on the surface of the object to be registered.

In an embodiment, respective registration points in the first registration point set are points other than physiological and anatomical feature points on the surface of the object to be registered, and after registering the first registration point set with the projection point set to obtain the second transformation matrix, the registration method further includes: determining whether the registration number of the current registration reaches a third iteration number threshold; and if the registration number of the current registration does not reach the third iteration number threshold, taking the second image model as the first image model, taking the second transformation matrix as the first transformation matrix, and returning to perform the step of adjusting, based on the first transformation matrix, the first image model to obtain the second image model.

In an embodiment, obtaining the first transformation matrix obtained in the previous registration includes: registering a registration point set on a surface of the first image model with the first registration point set to obtain the first transformation matrix.

In an embodiment, obtaining the registration point set on the surface of the first image model includes: obtaining a template image model, a surface of the template image model having a template point set; and matching the template image model with the first image model to project the template point set to the surface of the first image model to obtain the registration point set on the surface of the first image model.

In an embodiment, the registration method further includes: determining whether the second transformation matrix obtained in the current registration reaches a preset transformation matrix threshold; and if the second transformation matrix does not reach the preset transformation matrix threshold, taking the second image model as the first image model, taking the second transformation matrix as the first transformation matrix, and returning to perform the step of adjusting, based on the first transformation matrix, the first image model to obtain the second image model, until the second transformation matrix obtained in the current registration reaches the preset transformation matrix threshold.

In an embodiment, the second image model is moved and rotated based on an offset and a rotation angle in the second transformation matrix to obtain a matched image model.

In a second aspect, an embodiment of the present disclosure provides a registration apparatus. The registration apparatus includes: an obtaining module configured to obtain a first image model of an object to be registered used in a previous registration and a first transformation matrix obtained in the previous registration; an adjustment module configured to, for a current registration, adjust, based on the first transformation matrix, the first image model to obtain a second image model; a projection module configured to project a first registration point set on a surface of the object to be registered onto a surface of the second image model to obtain a projection point set; and a registration module configured to register the first registration point set with the projection point set to obtain a second transformation matrix.

In a third aspect, an embodiment of the present disclosure provides a computer device. The computer device includes a memory and a processor. The memory stores a computer program, and the processor, when executing the computer program, implements steps of the registration method provided in the first aspect.

In a fourth aspect, an embodiment of the present disclosure provides a computer-readable storage medium having a computer program stored thereon. When the computer program is executed by a processor, steps of the registration method provided in the first aspect are implemented.

In a fifth aspect, an embodiment of the present disclosure provides a computer program product including a computer program. When the computer program is executed by a processor, steps of the registration method provided in the first aspect are implemented.

The details of various embodiments of the present disclosure will be described in the following drawings and descriptions. According to the description, drawings and claims, those skilled in the art will easily understand other features, problems solved and beneficial effects of the present disclosure.

## BRIEF DESCRIPTION OF THE DRAWINGS

In order to describe the technical solutions of the embodiments of the present disclosure or the conventional art more clearly, the accompanying drawings required for describing the embodiments or for describing the conventional art will be briefly introduced as follows. Apparently, the accompanying drawings, in the following description, illustrate merely some embodiments of the present disclosure, for a person of ordinary skill in the art, other drawings can also be obtained according to these accompanying drawings without making any creative efforts.

FIG. 1 is a diagram illustrating an application environment of a registration method provided by an embodiment.

FIG. 2 is a schematic flow diagram illustrating steps of a registration method provided by an embodiment.

FIG. 3 is a schematic flow diagram illustrating steps of a registration method provided by another embodiment.

FIG. 4 is a schematic flow diagram illustrating steps of a registration method provided by another embodiment.

FIG. 5 is a schematic flow diagram illustrating steps of a registration method provided by another embodiment.

FIG. 6 is a schematic flow diagram illustrating steps of a registration method provided by another embodiment.

FIG. 7 is a schematic diagram illustrating a distribution of rough registration points provided by an embodiment.

FIG. 8 is a schematic diagram illustrating a distribution of fine registration points provided by an embodiment.

FIG. 9 is a schematic flow diagram illustrating steps of a registration method provided by another embodiment.

FIG. 10 is a schematic flow diagram illustrating steps of a registration method provided by another embodiment.

FIG. 11 is a schematic diagram illustrating a configuration of a registration apparatus provided by an embodiment.

FIG. 12 is a schematic diagram illustrating a configuration of a computer device provided by an embodiment of the present disclosure.

## DETAILED DESCRIPTION OF THE EMBODIMENTS

In order to make the above objectives, features and advantages of the present disclosure more obvious and understandable, specific implementations of the present disclosure are described in detail below with reference to the accompanying drawings. In the following description, many specific details are set forth in order to fully understand the present disclosure. However, the present disclosure can be implemented in many other ways different from those described herein, and those skilled in the art can make similar improvements without departing from the connotation of the present disclosure. Therefore, the present disclosure is not limited by the specific embodiments disclosed below.

The serial numbers assigned to components in the present disclosure, such as "first", "second", etc., are only used to distinguish the objects described and do not have any order or technical meaning.

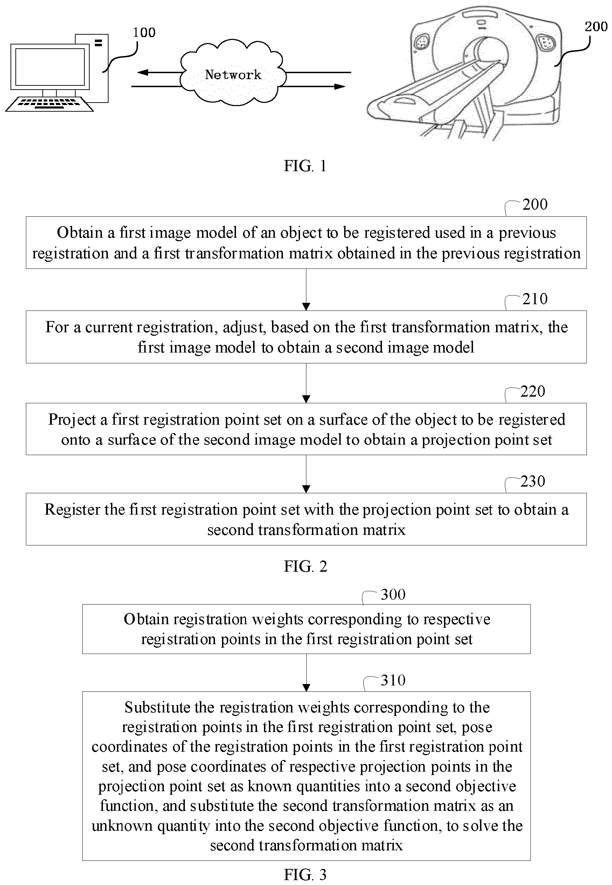

The registration method provided in an embodiment of the present disclosure can be applied in an application environment as shown in FIG. 1. The application environment includes a terminal 100 and a medical scanning device 200. The terminal 100 may communicate with the medical scanning device 200 through a network. The terminal 100 may be, but is not limited to, various personal computers, laptop computers, or tablet computers. The medical scanning device 200 may be, but is not limited to, a computed tomography (CT) device or a positron emission computed tomography (PET) device.

The technical solution of the present disclosure and how the technical solution of the present disclosure solves the technical problem are described in detail below with specific embodiments. The following specific embodiments may be combined with each other, and the same or similar concepts or processes may not be repeated in some embodiments. The embodiments of the present disclosure will be described below with reference to the accompanying drawings.

In an embodiment, as shown in FIG. 2, a registration method is provided. Taking the method applied to the terminal in FIG. 1 as an example for description, the method includes the following steps.

In step 200, a first image model of an object to be registered used in a previous registration and a first transformation matrix obtained in the previous registration are obtained.

The first image model of the object to be registered used in the previous registration refers to an image model registered with the object to be registered in the previous registration. The first transformation matrix is configured to represent a transformation relationship between an image space and a physical space of the object to be registered determined in the previous registration. Before the terminal performs a current registration, the first image model of the object to be registered used in the previous registration and the first transformation matrix obtained in the previous registration are obtained in advance. This embodiment does not limit the specific method used in the previous registration, as long as its function can be achieved.

The current registration is performed, including steps 210 to 230.

In step 210, the first image model is adjusted based on the first transformation matrix to obtain a second image model.

When the terminal performs the current registration, the first image model is adjusted based on the first transformation matrix obtained in the previous registration to obtain the second image model. The first transformation matrix includes an offset required to be moved by and a rotation angle required to be rotated by. In other words, the terminal moves and rotates the first image model according to the offset and the rotation angle in the first transformation matrix, so as to obtain the second image model.

In step 220, a first registration point set on a surface of the object to be registered is projected onto a surface of the second image model to obtain a projection point set.

Respective registration points in the first registration point set on the surface of the object to be registered may be registration points pre-set by a technician on the surface of the object to be registered. This embodiment does not limit the specific number of the registration points in the first registration point set and the specific positions of the registration points, as long as its function can be achieved.

After obtaining the second image model, the terminal projects the first registration point set on the surface of the object to be registered onto the surface of the second image model to obtain the projection point set. In other words, for each registration point in the first registration point set on the surface of the object to be registered, the registration point is projected onto the surface of the second image model to obtain a projection point on the surface of the second image model corresponding to the registration point, thereby obtaining projection points on the surface of the second image model corresponding to the respective registration points in the first registration point set, i.e., obtaining the projection point set.

In step 230, the first registration point set is registered with the projection point set to obtain a second transformation matrix.

After obtaining the projection point set, the terminal registers the first registration point set of the object to be registered with the projection point set to obtain the second transformation matrix. The second transformation matrix is configured to represent a transformation relationship between the image space and the physical space of the object to be registered determined in the current registration. The second transformation matrix includes an offset required to be moved by and a rotation angle required to be rotated by. This embodiment does not limit the specific process of registering the first registration point set with the projection point set, as long as its function can be achieved.

In an optional embodiment, after obtaining the second transformation matrix, the terminal moves and rotates the second image model according to the offset and the rotation angle in the second transformation matrix, so as to obtain an image model that matches the object to be registered.

In the registration method provided by the embodiment of the present disclosure, by obtaining the first image model of the object to be registered used in the previous registration and the transformation matrix obtained in the previous registration, for the current registration, the first image model is adjusted based on the first transformation matrix to obtain the second image model. Further, the first registration point set on the surface of the object to be registered is projected onto the surface of the second image model to obtain the projection point set, and then the first registration point set is registered with the projection point set to obtain the second transformation matrix. In this embodiment, the projection point set obtained by projecting the first registration point set onto the surface of the second image model is used to register with the first registration point set. Compared with directly registering a registration point set on the second image model with the first registration point set, the problem of inaccurate second transformation matrix finally determined due to inaccurate registration points on the second image model can be avoided, and the dependence on the registration points on the second image model can be reduced, thereby improving the accuracy of registration.

In addition, the registration method provided in the present disclosure can achieve a high-precision registration result using a small number of registration points.

In an embodiment, projection points in the projection point set are projection points having closest distances to corresponding registration points in the first registration point set respectively. In other words, when each registration point in the first registration point set is projected onto the surface of the second image model, multiple initial projection points may be obtained, and the projection point in the projection point set corresponding to the registration point is a projection point having a closest distance to the registration point among the multiple initial projection points.

In this embodiment, the projection points in the projection point set are set to be the projection points having closest distances to corresponding registration points in the first registration point set respectively. Using this projection point set to register with the first registration point set can improve the accuracy of registration, thereby obtaining a more accurate second transformation matrix.

In an embodiment, a possible implementation method of registering the first registration point set with the projection point set to obtain the second transformation matrix includes:

substituting pose coordinates of the registration points in the first registration point set and pose coordinates of the projection points in the projection point set as known quantities into a first objective function, and substituting the second transformation matrix as an unknown quantity into the first objective function, to solve the second transformation matrix; an optimization objective of the first objective function being to minimize a pose difference between a first transformation point set and the first registration point set, and the first transformation point set being obtained by transforming the projection point set based on the second transformation matrix.

Assuming that the pose coordinate of the $i^{th}$ registration point in the first registration point set is denoted as $q_i$, the pose coordinate of the projection point corresponding to the $i^{th}$ registration point in the projection point set is denoted as $p_i$, and the second transformation matrix includes the offset $t_2$ and the rotation angle $R_2$, then the first transformation point set may be denoted as:

$$( R_2 * p_i' + t_2 )$$, and then the first objective function may be denoted as:

$$argmin_{R_2,t_2} \sum_i^{N_1} \|(R_2 * p_i' + t_2) - q_i\|^2$$

, where $N_1$ is the number of the registration points in the first registration point set. The terminal substitutes the pose coordinates of the registration points in the first registration point set and the pose coordinates of the projection points in the projection point set into the first objective function to obtain the offset and the rotation angle in the second transformation matrix, thereby obtaining the second transformation matrix.

In this embodiment, the first objective function is solved using the pose coordinates of the registration points in the first registration point set and the pose coordinates of the projection points in the projection point set to obtain the first transformation matrix. This method of calculating the second transformation matrix is simple in logic, easy to implement, and has a high calculation efficiency.

In an embodiment, as shown in FIG. 3, a possible implementation method of registering the first registration point set with the projection point set to obtain the second transformation matrix includes the following steps:

In step 300, registration weights corresponding to the registration points in the first registration point set are obtained. For each registration point in the first registration point set, the registration weight is obtained based on a registration number of the current registration, a preset registration number, and a pose difference between the registration point and a projection point corresponding to the registration point.

In an embodiment, for each registration point in the first registration point set, the registration weight may be obtained based on at least one of the registration number of the current registration, the preset registration number, and the pose difference between the registration point and the projection point corresponding to the registration point. For example, the registration weight of the registration point is obtained based on the pose difference between the registration point and the projection point corresponding to the registration point.

During the registration process, the registration weights corresponding to the respective registration points are different for different registration numbers. The registration weights corresponding to the registration points in the first registration point set are related to the registration number of the current registration, the preset registration number pre-set by a technician, and the pose difference between the registration point and the projection point corresponding to the registration point. This embodiment does not limit the specific method for determining the registration weights, as long as its function can be achieved. The terminal obtains the registration weights corresponding to the registration points in the first registration point set.

In an optional embodiment, the registration weight may be calculated using the following formula:

$$w_i = \left(1 - \frac{l}{M}\right) + \frac{l}{M} * \frac{1}{1 + \|p_i' - q_i\|^2},$$

where $l$ denotes the registration number of the current registration, M is the preset registration number, $w_i$ is the registration weight corresponding to the $i^{th}$ registration point, and $\|p_i' - q_i\|$ is the pose difference between the projection point $p_i'$ corresponding to the $i^{th}$ registration point and the $i^{th}$ registration point $q_i$.

In step 310, the registration weights corresponding to the registration points in the first registration point set, the pose coordinates of the registration points in the first registration point set, and the pose coordinates of the projection points in the projection point set are substituted as known quantities into a second objective function, and the second transformation matrix is substituted as an unknown quantity into the second objective function, to solve the second transformation matrix. An optimization objective of the second objective function is to minimize a pose difference between a first transformation point set and the first registration point set, and the first transformation point set is obtained by transforming the projection point set based on the second transformation matrix.

The second objective function may be denoted as:

$$argmin_{R_2,t_2} \sum_i^{N_1} w_i \|(R_2 * p_i' + t_2) - q_i\|^2.$$

The terminal substitutes the known registration weights corresponding to the registration points in the first registration point set, the pose coordinates of the registration points in the first registration point set, and the pose coordinates of the projection points in the projection point set into the second objective function to solve the offset and the rotation angle in the second transformation matrix, so as to obtain the second transformation matrix.

In this embodiment, in order to reduce the influence of noise existed in the registration points on the registration result during the registration process, the registration weight is increased during the registration process. As the registration number increases, the weight corresponding to the registration point with greater noise is smaller, which can reduce the influence of noise on the registration result, thereby improving the accuracy of registration. In addition, the method of calculating the second transformation matrix in this embodiment is simple in logic, easy to implement, and has a high calculation efficiency.

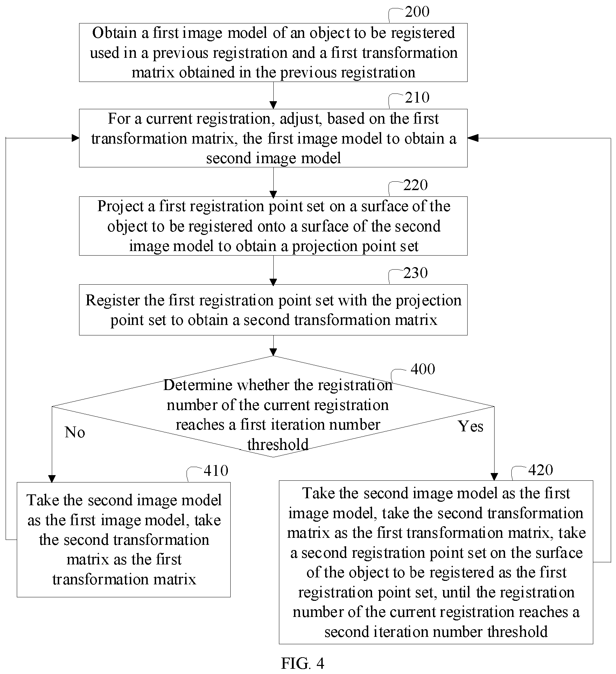

In an embodiment, the registration points in the first registration point set are physiological and anatomical feature points on the surface of the object to be registered, i.e., rough registration points. A probe may be used to set the rough registration points, and a positioning method of the probe may be divided into visual tracking positioning, magnetic navigation positioning, or the like, which is not limited in this embodiment. Based on this, as shown in FIG. 4, after registering the first registration point set with the projection point set to obtain the second transformation matrix, the registration method further includes the following steps:

In step 400, it is determined whether the registration number of the current registration reaches a first iteration number threshold.

The first iteration number threshold may be preset by the technician and stored in the terminal. After obtaining the second transformation matrix, the terminal obtains the registration number of the current registration of the second transformation matrix and the first iteration number threshold, and compares the registration number of the current registration with the first iteration number threshold to determine whether the registration number of the current registration reaches the first iteration number threshold, i.e., whether the registration number of the current registration is equal to the first iteration number threshold.

Step 410, if the registration number of the current registration does not reach the first iteration number threshold, the second image model is taken as the first image model, the second transformation matrix is taken as the first transformation matrix, and it is returned to perform the step of adjusting the first image model based on the first transformation matrix to obtain the second image model.

If the terminal determines that the registration number of the current registration does not reach the first iteration number threshold, i.e., the registration number of the current registration is less than the first iteration number threshold, then the model used for the current registration (the second image model) is taken as the first image model, and the second transformation matrix obtained in the current registration is taken as the first transformation matrix, and then it is returned to perform the steps 210, 220, 230, 400 and 410.

In this embodiment, in a case that the registration number of the current registration does not reach the first iteration number threshold, the second image model is taken as the first image model, and the second transformation matrix is taken as the first transformation matrix, and then it is returned to perform the steps 210, 220, 230, 400 and 410. Multiple registrations are performed based on the rough registration points, which can improve the accuracy of registration.

In an optional embodiment, the condition for stopping the current registration further includes whether the second transformation matrix obtained in the current registration reaches a preset transformation matrix threshold. In other words, if the second transformation matrix obtained in the current registration does not reach the preset transformation matrix threshold, the second image model is taken as the first image model, the second transformation matrix is taken as the first transformation matrix, and it is returned to perform the steps 210, 220, 230, 400, and 410, until the second transformation matrix obtained in the current registration reaches the preset transformation threshold. The preset transformation threshold may include, for example, a threshold of the offset and a threshold of the rotation angle in the second transformation matrix.

In an optional embodiment, the condition for stopping the current registration may include whether the registration number of the current registration reaches the first iteration number threshold or whether the second transformation matrix obtained in the current registration reaches the preset transformation matrix threshold. In other words, as long as one of the two conditions for stopping the current registration is met, the registration is stopped.

In another optional embodiment, the condition for stopping the current registration may include whether the registration number of the current registration reaches the first iteration number threshold and whether the second transformation matrix obtained in the current registration reaches the preset transformation matrix threshold. The registration is stopped only when both of the conditions are met.

In an embodiment, with continued reference to FIG. 4, in an embodiment, the registration method further includes the following steps.

In step 420, if the registration number of the current registration reaches the first iteration number threshold, the second image model is taken as the first image model, the second transformation matrix is taken as the first transformation matrix, and a second registration point set on the surface of the object to be registered is taken as the first registration point set, and then it is returned to perform the step of adjusting the first image model based on the first transformation matrix to obtain the second image model, until the registration number of the current registration reaches a second iteration number threshold. Respective registration points in the second registration point set are points other than the physiological and anatomical feature points on the surface of the object to be registered.

The second registration point set on the surface of the object to be registered refers to points other than the physiological and anatomical feature points on the surface of the object to be registered, i.e., the registration points in the second registration point set are different from the registration points in the first registration point set. The registration points in the second registration point set may also be called as fine registration points. A manner of probe may be used to set the fine registration points, and a positioning method of the probe may be divided into visual tracking positioning, magnetic navigation positioning, or the like, which is not limited in this embodiment.

When the terminal determines that the registration number of the current registration reaches the first iteration number threshold, i.e., the registration number of the current registration is equal to the first iteration number threshold, the model used for the current registration (the second image model) is taken as the first image model, the second transformation matrix obtained in the current registration is taken as the first transformation matrix, and the second registration point set on the surface of the object to be registered is taken as the first registration point set, and then it is returned to perform the steps 210, 220, 230, 400 and 410, until it is determined that the registration number of the current registration reaches the second iteration number threshold.

In this embodiment, after the registration number of the current registration reaches the first iteration number, i.e., after multiple registrations are performed by using the first registration point set (i.e., rough registrations are performed by using the rough registration points), multiple registrations are performed by using the second registration point set (i.e., fine registrations are performed by using the fine registration points), which can improve the accuracy of registration.

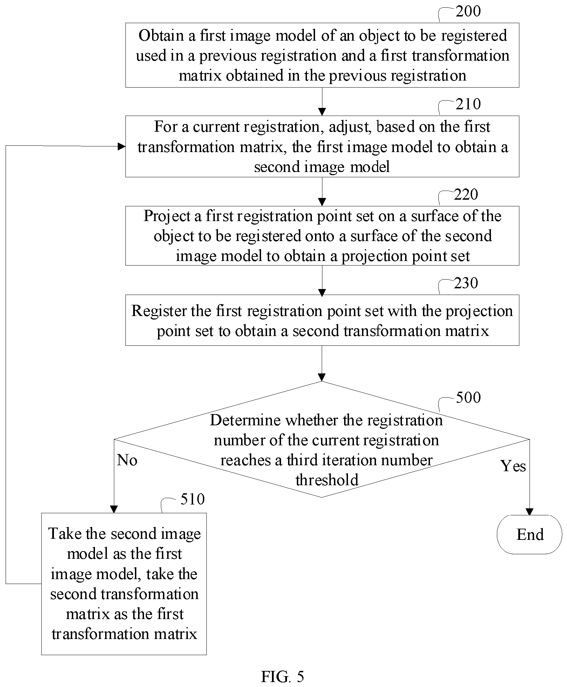

In an embodiment, the registration points in the first registration point set are points other than the physiological and anatomical feature points on the surface of the object to be registered, i.e., fine registration points. For the specific description of the fine registration points, reference may be made to the description in the above embodiment, which will not be repeated here. Based on this, as shown in FIG. 5, after registering the first registration point set with the projection point set to obtain the second transformation matrix, the registration method further includes the following steps:

In step 500, it is determined whether the registration number of the current registration reaches a third iteration number threshold.

The third iteration number threshold may be pre-set by a technician and stored in a memory of the terminal. The third iteration number threshold may be the same as or different from the first iteration number threshold. After obtaining the second transformation matrix, the terminal obtains the registration number of the current registration of the second transformation matrix and the third iteration number threshold, and compares the registration number of the current registration with the third iteration number threshold to determine whether the registration number of the current registration reaches the third iteration number threshold, i.e., whether the registration number of the current registration is equal to the third iteration number threshold.

In step 510, if the registration number of the current registration does not reach the third iteration number threshold, the second image model is taken as the first image model, the second transformation matrix is taken as the first transformation matrix, and it is returned to perform the step of adjusting the first image model based on the first transformation matrix to obtain the second image model.

If the terminal determines that the registration number of the current registration does not reach the third iteration number threshold, the model currently used (the second image model) is taken as the first image model, and the second transformation matrix obtained in the current registration is taken as the first transformation matrix, and then it is returned to perform the steps 210, 220, 230, 500 and 510.

In this embodiment, in a case that the registration number of the current registration does not reach the third iteration number threshold, the second image model is taken as the first image model, and the second transformation matrix is taken as the first transformation matrix, and it is returned to perform the steps 210, 220, 230, 500 and 510. Multiple registrations are performed based on the fine registration points, which can improve the accuracy of registration.

In an embodiment, the previous registration is the initial registration, i.e., the first image model used in a first registration is image data obtained by scanning the object to be registered by a CT device, and the image data is sent to the terminal, and then the terminal performs a three-dimensional reconstruction on the image data by using a three-dimensional surface reconstruction algorithm to obtain the image model of the object to be registered. Based on this, a possible implementation method of obtaining the first transformation matrix obtained in the previous registration includes:
registering a registration point set on a surface of the first image model with the first registration point set to obtain the first transformation matrix.

After obtaining the first image model, the terminal selects corresponding points on the surface of the object to be registered through the registration point set on the surface of the first image model to form the first registration point set, and registers the registration point set on the surface of the first image model with the first registration point set to obtain the first transformation matrix. This embodiment does not limit the specific method of registering the registration point set on the surface of the first image model with the first registration point set, as long as the first transformation matrix can be obtained.

In an optional embodiment, the terminal may register the registration point set on the surface of the first image model with the first registration point set by using a point set registration algorithm to obtain the first transformation matrix.

In an optional embodiment, the terminal may substitute the pose coordinates of the registration points in the registration point set on the surface of the first image model and the pose coordinates of the registration points in the first registration point set as known quantities into a third objective function, and substitute the first transformation matrix as an unknown quantity into the third objective function, so as to solve the first transformation matrix.

Assuming that the pose coordinate of the $i^{th}$ registration point in the registration point set on the surface of the first image model is denoted as $p_i$, the pose coordinate of the $i^{th}$ registration point in the first registration point set is denoted as $q_i$, and the first transformation matrix includes the offset $t_1$ and the rotation angle $R_1$, then the third objective function may be denoted as:

$$\underset{R_1,t_1}{argmin} \sum_i^{N_1} \|(R_1 * p_i + t_1) - q_i\|^2$$

. The terminal substitutes the pose coordinates of the registration points in the registration point set on the surface of the first image model and the pose coordinates of the registration points in the first registration point set into the third objective function to obtain the offset and the rotation angle in the first transformation matrix, and thus can obtain the first transformation matrix.

In this embodiment, the registration method for registering the registration point set on the surface of the first image model with the first registration point set to obtain the first transformation matrix is provided. This method is simple to understand, and easy to implement. Moreover, since the registration method provided in this embodiment is used to perform a registration first and then perform the current registration, the efficiency and accuracy of the current registration can be improved.

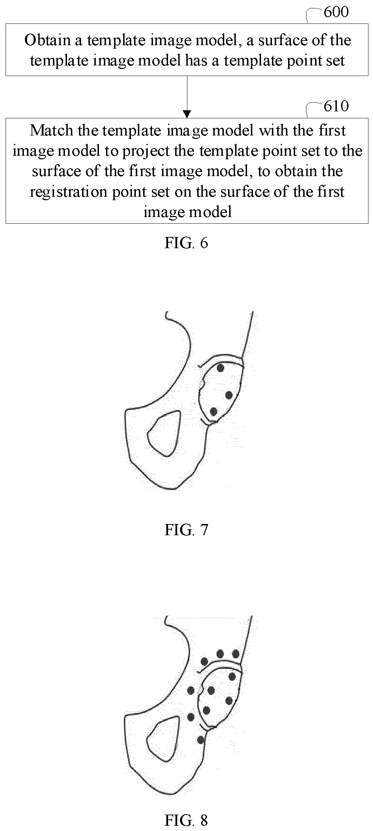

In an embodiment, referring to FIG. 6, a possible implementation method of obtaining the registration point set on the surface of the first image model includes the following steps:

In step 600, a template image model is obtained. A surface of the template image model has a template point set.

The template image model refers to a universal model used for registration. For example, a universal three-dimensional digital model of a pelvis. The template image model may be pre-stored in the memory of the terminal by a technician. The terminal directly obtains the template image model from the memory. The surface of the template image model has the template point set, and the template point set may include physiological and anatomical feature points (rough registration points), and points other than the physiological and anatomical feature points (fine registration points). The setting of the physiological and anatomical feature points facilitates the technician to find the corresponding points on the object to be registered. Generally, the number of the physiological and anatomical feature points in the template point set is at least three non-collinear points.

Specifically, for a pelvic image, the rough registration points are the physiological and anatomical feature points of the pelvis, and the fine registration points are generally set on a surface of a bone(s) in a region to be treated. The number of the fine registration points is at least 3, and optimally 10 or more.

In step 610, the template image model is matched with the first image model to project the template point set to the surface of the first image model, to obtain the registration point set on the surface of the first image model.

After obtaining the template image model, the terminal matches the template image model with the first image model to project the template point set on the template image model to the surface of the first image model, so as to obtain the registration point set on the surface of the first image model.

In this embodiment, the model image model is matched with the first image model to project the template point set to the surface of the first image model, so as to obtain the registration point set of the first image model, i.e., individualized registration points of the object to be detected may be obtained, thereby more intuitively guiding the technician to determine the registration point set on the surface of the object to be detected that corresponds to the registration point set on the surface of the first image model.

In a specific embodiment, a distribution of rough registration points on the surface of the first image model is shown in FIG. 7, and a distribution of fine registration points on the surface of the first image model is shown in FIG. 8.

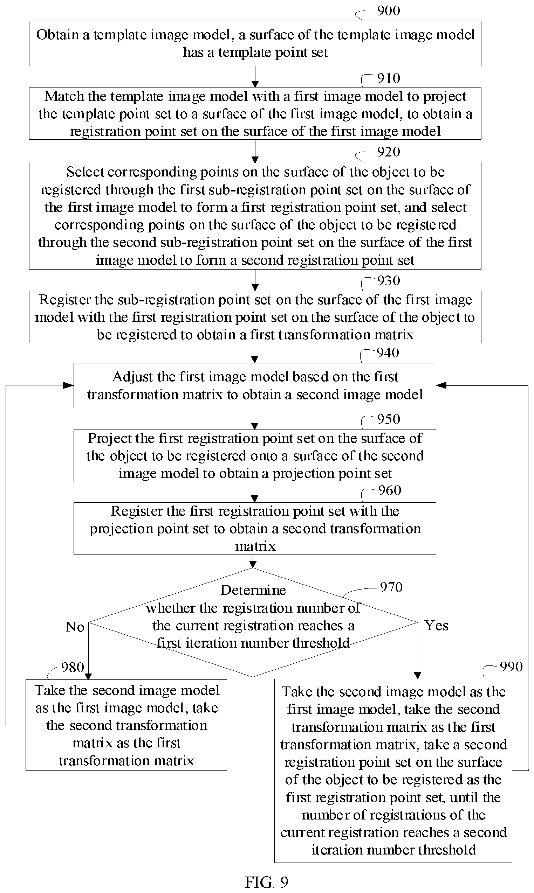

Referring to FIG. 9, in an embodiment, the present disclosure provides a registration method. The method includes the following steps:

In step 900, a template image model is obtained. A surface of the template image model has a template point set. The template point set includes a first template point set and a second template point set. Respective template points in the first template point set are physiological and anatomical feature points on a surface of an image model of a universal template object, and respective template points in the second template point set are points other than the physiological and anatomical feature points on the surface of the image model of the universal template object.

In step 910, the template image model is matched with a first image model of an object to be registered to project the template point set to a surface of the first image model, so as to obtain a registration point set on the surface of the first image model. The registration point set on the surface of the first image model includes a first sub-registration point set corresponding to the first template point set, and a second sub-registration point set corresponding to the second template point set. Respective sub-registration points in the first sub-registration point set are physiological and anatomical feature points on the surface of the image model of the object to be registered, and respective sub-registration points in the second sub-registration point set are points other than the physiological and anatomical feature points on the surface of the image model of the object to be registered.

In step 920, corresponding points are selected on the surface of the object to be registered through the first sub-registration point set on the surface of the first image model to form a first registration point set, and corresponding points are selected on the surface of the object to be registered through the second sub-registration point set on the surface of the first image model to form a second registration point set. The first registration point set is physiological and anatomical feature points selected on the surface of the object to be registered, and the second registration point set is points other than the physiological and anatomical feature points selected on the surface of the object to be registered;

In step 930, the first sub-registration point set on the surface of the first image model is registered with the first registration point set on the surface of the object to be registered to obtain a first transformation matrix.

In step 940, the first image model is adjusted based on the first transformation matrix to obtain a second image model.

In step 950, the first registration point set on the surface of the object to be registered is projected onto a surface of the second image model to obtain a projection point set.

In step 960, the first registration point set is registered with the projection point set to obtain a second transformation matrix.

Pose coordinates of registration points in the first registration point set and pose coordinates of projection points in the projection point set are substituted as known quantities into a first objective function, and the second transformation matrix is substituted as an unknown quantity into the first objective function, so as to solve the second transformation matrix.

In step 970, it is determined whether the registration number of a current registration reaches a first iteration number threshold.

In step 980, if the registration number of the current registration does not reach the first iteration number threshold, the second image model is taken as the first image model, the second transformation matrix is taken as the first transformation matrix, and it is returned to perform the steps 940 to 980.

In step 990, if the registration number of the current registration reaches the first iteration threshold, the second image model is taken as the first image model, the second transformation matrix is taken as the first transformation matrix, and the second registration point set on the surface of the object to be registered is taken as the first registration point set, and then it is returned to perform the steps 940 to 990, until the registration number of the current registration reaches a second iteration threshold. Respective registration points in the second registration point set are points other than the physiological and anatomical feature points on the surface of the object to be registered.

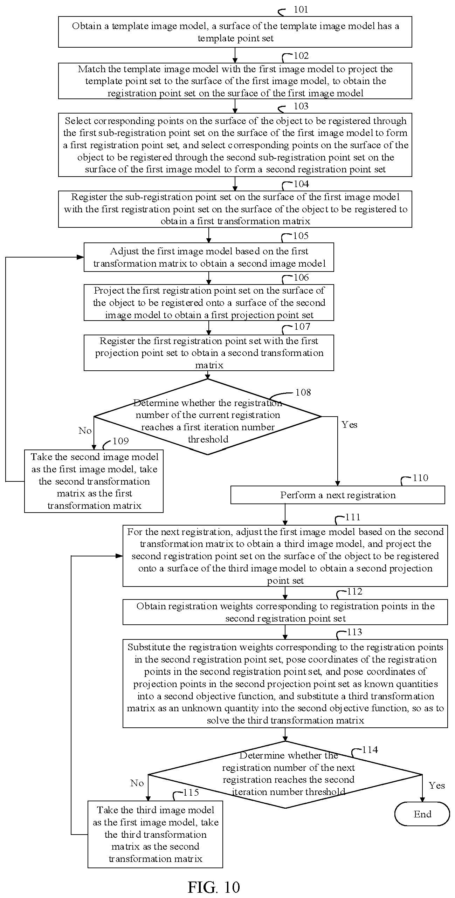

Referring to FIG. 10, in an embodiment, the present disclosure provides a registration method, the method includes the following steps:

In step 101, a template image model is obtained. A surface of the template image model has a template point set. The template point set includes a first template point set and a second template point set. Respective template points in the first template point set are physiological and anatomical feature points on a surface of an image model of a universal template object, and respective template points in the second template point set are points other than the physiological and anatomical feature points on the surface of the image model of the universal template object.

In step 102, the template image model is matched with a first image model of an object to be registered to project the template point set to a surface of the first image model, so as to obtain a registration point set on the surface of the first image model. The registration point set on the surface of the first image model includes a first sub-registration point set corresponding to the first template point set, and a second sub-registration point set corresponding to the second template point set. Respective sub-registration points in the first sub-registration point set are physiological and anatomical feature points on the surface of the image model of the object to be registered, and respective sub-registration points in the second sub-registration point set are points other than the physiological and anatomical feature points on the surface of the image model of the object to be registered.

In step 103, corresponding points are selected on the surface of the object to be registered through the first sub-registration point set on the surface of the first image model to form a first registration point set, and corresponding points are selected on the surface of the object to be registered through the second sub-registration point set on the surface of the first image model to form a second registration point set. The first registration point set is physiological and anatomical feature points selected on the surface of the object to be registered, and the second registration point set is points other than the physiological and anatomical feature points selected on the surface of the object to be registered;

In step 104, the first sub-registration point set on the surface of the first image model is registered with the first registration point set on the surface of the object to be registered to obtain a first transformation matrix.

In step 105, the first image model is adjusted based on the first transformation matrix to obtain a second image model.

In step 106, the first registration point set on the surface of the object to be registered is projected onto a surface of the second image model to obtain a first projection point set.

In step 107, the first registration point set is registered with the first projection point set to obtain a second transformation matrix.

Pose coordinates of registration points in the first registration point set and pose coordinates of projection points in the first projection point set are substituted as known quantities into a first objective function, and the second transformation matrix is substituted as an unknown quantity into the first objective function, so as to solve the second transformation matrix.

In step 108, it is determined whether the registration number of a current registration reaches a first iteration number threshold.

In step 109, if the registration number of the current registration does not reach the first iteration number threshold, the second image model is taken as the first image model, the second transformation matrix is taken as the first transformation matrix, and it is returned to perform the steps 105 to 109.

In step 110, if the registration number of the current registration reaches the first iteration number threshold, a next registration is performed.

In step 111, for the next registration, the first image model is adjusted based on the second transformation matrix to obtain a third image model. The second registration point set on the surface of the object to be registered is projected onto a surface of the third image model to obtain a second projection point set.

In step 112, registration weights corresponding to registration points in the second registration point set are obtained. For each registration point in the second registration point set, the registration weight is obtained based on a difference between the registration number of the next registration and the first iteration number threshold, a preset registration number, and a pose difference between the registration point and a second projection point corresponding to the registration point. The preset registration number is equal to a difference between a second iteration number threshold and the first iteration number threshold.

In step 113, the registration weights corresponding to the registration points in the second registration point set, pose coordinates of the registration points in the second registration point set, and pose coordinates of projection points in the second projection point set are substituted as known quantities into a second objective function, and a third transformation matrix is substituted as an unknown quantity into the second objective function, so as to solve the third transformation matrix.

In step 114, it is determined whether the registration number of the next registration reaches the second iteration number threshold.

In step 115, if the registration number for the next registration does not reach the second iteration number threshold, the third image model is taken as the first image model, the third transformation matrix is taken as the second transformation matrix, and it is returned to perform the steps 111 to 115.

It should be understood that although the individual steps in the flow diagrams involved of the embodiments as described above are shown sequentially as indicated by arrows, the steps are not necessarily performed sequentially in the order indicated by the arrows. Unless explicitly stated herein, the execution of these steps is not strictly limited in order and these steps can be performed in any other order. Moreover, at least some of the steps in the flow diagrams involved of the embodiments as described above may include a plurality of steps or a plurality of stages that are not necessarily performed at the same time, but may be performed at different times. The order in which these steps or stages are performed is not necessarily sequential, and these steps may be performed alternately or alternately with other steps or at least some of the steps or stages in other steps.

Based on the same inventive concept, embodiments of the present disclosure also provide a registration apparatus for implementing the registration method as described above. The solution to the problem provided by the apparatus is similar to the implementation of the method documented above, so the specific features in the one or more embodiments of the registration apparatus provided below may be understood with reference to the features of the registration method above and will not be repeated here.

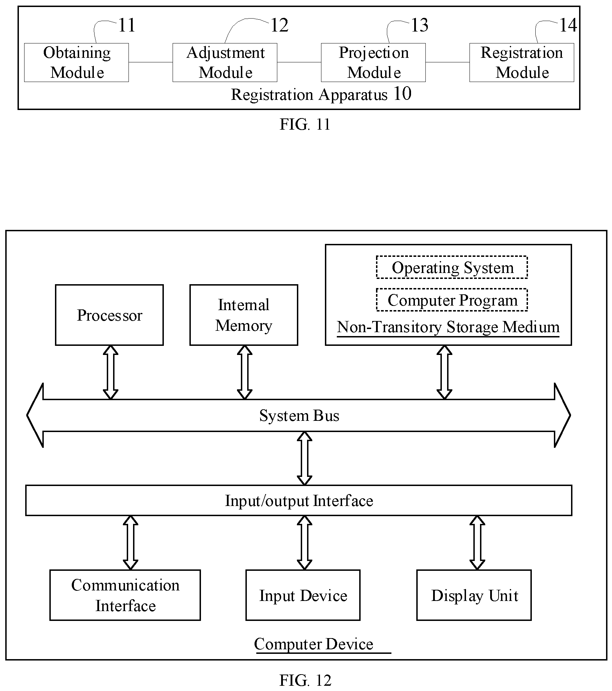

Referring to FIG. 11, an embodiment of the present disclosure provides a registration apparatus 10. The registration apparatus 10 includes an obtaining module 11, an adjustment module 12, a projection module 13 and a registration module 14. The obtaining module 11 is configured to obtain a first image model of an object to be registered used in a previous registration and a first transformation matrix obtained in the previous registration. The adjustment module 12 is configured to, for a current registration, adjust, based on the first transformation matrix, the first image model to obtain a second image model. The projection module 13 is configured to project a first registration point set on a surface of the object to be registered onto a surface of the second image model to obtain a projection point set. The registration module 14 is configured to register the first registration point set with the projection point set to obtain a second transformation matrix.

In an embodiment, projection points in the projection point set are projection points having closest distances to corresponding registration points in the first registration point set respectively.

In an embodiment, the registration module 14 is specifically configured to: substitute the pose coordinates of the registration points in the first registration point set and the pose coordinates of the projection points in the projection point set as known quantities into a first objective function, and substitute the second transformation matrix as an unknown quantity into the first objective function to solve the second transformation matrix. An optimization objective of the first objective function is to minimize a pose difference between a first transformation point set and the first registration point set, and the first transformation point set is obtained by transforming the projection point set based on the second transformation matrix.

In an embodiment, the registration module 14 is further specifically configured to: obtain registration weights corresponding to respective registration points in the first registration point set; for each registration point in the first registration point set, the registration weight being obtained based on at least one of the registration number of the current registration, a preset registration number, and a pose difference between the registration point and a projection point corresponding to the registration point; and substitute the registration weights corresponding to the registration points in the first registration point set, pose coordinates of the registration points in the first registration point set and pose coordinates of respective projection points in the projection point set as known quantities into a second objective function, and substitute the second transformation matrix as an unknown quantity into the second objective function, to solve the second transformation matrix.

In an embodiment, respective registration points in the first registration point set are physiological and anatomical feature points on the surface of the object to be registered. The registration device 10 further includes a determination module. The determination module is configured to: determine whether the registration number of the current registration reaches a first iteration number threshold; and take, if the registration number of the current registration does not reach the first iteration number threshold, the second image model as the first image model, take the second transformation matrix as the first transformation matrix, and return to perform the step of adjusting, based on the first transformation matrix, the first image model to obtain the second image model.

In an embodiment, the determination module is further configured to: take, if the registration number of the current registration reaches the first iteration number threshold, the second image model as the first image model, take the second transformation matrix as the first transformation matrix, take a second registration point set on the surface of the object to be registered as the first registration point set, and return to perform the step of adjusting, based on the first transformation matrix, the first image model to obtain the second image model, until the registration number of the current registration reaches a second iteration number threshold. Respective registration points in the second registration point set are points other than the physiological and anatomical feature points on the surface of the object to be registered.

In an embodiment, respective registration points in the first registration point set are points other than physiological and anatomical feature points on the surface of the object to be registered. The determination module is further configured to: determine whether the registration number of the current registration reaches a third iteration number threshold; and take, if the registration number of the current registration does not reach the third iteration number threshold, take the second image model as the first image model, take the second transformation matrix as the first transformation matrix, and return to perform the step of adjusting, based on the first transformation matrix, the first image model to obtain the second image model.

In an embodiment, the obtaining module 11 is specifically configured to register a registration point set on a surface of the first image model with the first registration point set to obtain the first transformation matrix.

In an embodiment, the obtaining module 11 is further specifically configured to: obtain a template image model, a surface of the template image model having a template point set; and match the template image model with the first image model to project the template point set to the surface of the first image model to obtain the registration point set on the surface of the first image model.

The individual modules in the above registration apparatus can be implemented in whole or in part by software, hardware and combinations thereof. Each of the above modules may be embedded in hardware form or independent of a processor in a computer device, or may be stored in software form on a memory in the computer device so that the processor can be called to perform the operations corresponding to each of the above modules.

In an embodiment, a computer device is provided, which may be a terminal. A diagram illustrating an internal configuration of the computer device may be shown in FIG. 12. The computer device includes a processor, a memory, a communication interface, a display screen, and an input device connected via a system bus. The processor of the computer device is configured to provide computing and control capabilities. The memory of the computer device includes a non-transitory storage medium and an internal memory. The non-transitory storage medium stores operating systems and computer programs. The internal memory provides an environment for the operation of the operating systems and the computer programs in the non-transitory storage medium. The communication interface of the computer device is configured to communicate with external terminals in wired or wireless mode, which can be realized by WIFI, mobile cellular network, near field communication (NFC) or other technologies. The computer programs are executed by the processor in order to implement a registration method. The display screen of the computer device may be an LCD or e-ink display, and the input device of the computer device may be a touch layer covered by the display screen, or a key, trackball or trackpad set on the housing of the computer device, or an external keyboard, trackpad or mouse, etc.

It should be understood by a person of ordinary skill in the art that the configuration illustrated in FIG. 12 is only a block diagram of part of the configuration related to the solution of the present disclosure, and does not constitute a limitation on the computer device to which the solution of the present disclosure is applied. A specific the computer device may include more or less components than those shown in the figure, or may combine some components, or may have a different arrangement of components.

In an embodiment, a computer device is provided. The computer device includes a memory and a processor. The memory stores a computer program, and the processor, when executing the computer program, implements the following steps: obtaining a first image model of an object to be registered used in a previous registration and a first transformation matrix obtained in the previous registration; for a current registration, adjusting, based on the first transformation matrix, the first image model to obtain a second image model; projecting a first registration point set on a surface of the object to be registered onto a surface of the second image model to obtain a projection point set; and registering the first registration point set with the projection point set to obtain a second transformation matrix.

In an embodiment, projection points in the projection point set are projection points having closest distances to corresponding registration points in the first registration point set respectively.

In an embodiment, the processor, when executing the computer program, further implements the following steps: substituting the pose coordinates of the registration points in the first registration point set and the pose coordinates of the projection points in the projection point set as known quantities into a first objective function, and substituting the second transformation matrix as an unknown quantity into the first objective function, to solve the second transformation matrix. An optimization objective of the first objective function is to minimize a pose difference between a first transformation point set and the first registration point set, and the first transformation point set is obtained by transforming the projection point set based on the second transformation matrix.

In an embodiment, the processor, when executing the computer program, further implements the following steps: obtaining registration weights corresponding to respective registration points in the first registration point set; for each registration point in the first registration point set, the registration weight being obtained based on at least one of the registration number of the current registration, a preset registration number, and a pose difference between the registration point and a projection point corresponding to the registration point; and substituting the registration weights corresponding to the registration points in the first registration point set, pose coordinates of the registration points in the first registration point set and pose coordinates of respective projection points in the projection point set as known quantities into a second objective function, and substituting the second transformation matrix as an unknown quantity into the second objective function, to solve the second transformation matrix.

In an embodiment, the processor, when executing the computer program, further implements the following steps: determining whether the registration number of the current registration reaches a first iteration number threshold; and if the registration number of the current registration does not reach the first iteration number threshold, taking the second image model as the first image model, taking the second transformation matrix as the first transformation matrix, and returning to perform the step of adjusting, based on the first transformation matrix, the first image model to obtain the second image model.

In an embodiment, the processor, when executing the computer program, further implements the following steps: if the registration number of the current registration reaches the first iteration number threshold, taking the second image model as the first image model, taking the second transformation matrix as the first transformation matrix, taking a second registration point set on the surface of the object to be registered as the first registration point set, and returning to perform the step of adjusting, based on the first transformation matrix, the first image model to obtain the second image model, until the registration number of the current registration reaches a second iteration number threshold. Respective registration points in the second registration point set are points other than the physiological and anatomical feature points on the surface of the object to be registered.

In an embodiment, the processor, when executing the computer program, further implements the following steps: determining whether the registration number of the current registration reaches a third iteration number threshold; and if the registration number of the current registration does not reach the third iteration number threshold, taking the second image model as the first image model, taking the second transformation matrix as the first transformation matrix, and returning to perform the step of adjusting, based on the first transformation matrix, the first image model to obtain the second image model.

In an embodiment, the processor, when executing the computer program, further implements the following steps: registering a registration point set on a surface of the first image model with the first registration point set to obtain the first transformation matrix.

In an embodiment, the processor, when executing the computer program, further implements the following steps: obtaining a template image model, a surface of the template image model having a template point set; and matching the template image model with the first image model to project the template point set to the surface of the first image model to obtain the registration point set on the surface of the first image model.

In an embodiment, a computer readable storage medium is provided, having a computer program stored thereon. When the computer program is executed by a processor, the following steps are implemented: obtaining a first image model of an object to be registered used in a previous registration and a first transformation matrix obtained in the previous registration; for a current registration, adjusting, based on the first transformation matrix, the first image model to obtain a second image model; projecting a first registration point set on a surface of the object to be registered onto a surface of the second image model to obtain a projection point set; and registering the first registration point set with the projection point set to obtain a second transformation matrix.

In an embodiment, projection points in the projection point set are projection points having closest distances to corresponding registration points in the first registration point set respectively.

In an embodiment, when the computer program is executed by a processor, the following steps are further implemented: substituting the pose coordinates of the registration points in the first registration point set and the pose coordinates of the projection points in the projection point set as known quantities into a first objective function, and substituting the second transformation matrix as an unknown quantity into the first objective function, to solve the second transformation matrix. An optimization objective of the first objective function is to minimize a pose difference between a first transformation point set and the first registration point set, and the first transformation point set is obtained by transforming the projection point set based on the second transformation matrix.

In an embodiment, when the computer program is executed by a processor, the following steps are further implemented: obtaining registration weights corresponding to respective registration points in the first registration point set; for each registration point in the first registration point set, the registration weight being obtained based on at least one of the registration number of the current registration, a preset registration number, and a pose difference between the registration point and a projection point corresponding to the registration point; and substituting the registration weights corresponding to the registration points in the first registration point set, pose coordinates of the registration points in the first registration point set and pose coordinates of respective projection points in the projection point set as known quantities into a second objective function, and substituting the second transformation matrix as an unknown quantity into the second objective function, to solve the second transformation matrix.

In an embodiment, when the computer program is executed by a processor, the following steps are further implemented: determining whether the registration number of the current registration reaches a first iteration number threshold; and if the registration number of the current registration does not reach the first iteration number threshold, taking the second image model as the first image model, taking the second transformation matrix as the first transformation matrix, and returning to perform the step of adjusting, based on the first transformation matrix, the first image model to obtain the second image model.

In an embodiment, when the computer program is executed by a processor, the following steps are further implemented: if the registration number of the current registration reaches the first iteration number threshold, taking the second image model as the first image model, taking the second transformation matrix as the first transformation matrix, taking a second registration point set on the surface of the object to be registered as the first registration point set, and returning to perform the step of adjusting, based on the first transformation matrix, the first image model to obtain the second image model, until the registration number of the current registration reaches a second iteration number threshold. Respective registration points in the second registration point set are points other than the physiological and anatomical feature points on the surface of the object to be registered.

In an embodiment, when the computer program is executed by a processor, the following steps are further implemented: determining whether the registration number of the current registration reaches a third iteration number threshold; and if the registration number of the current registration does not reach the third iteration number threshold, taking the second image model as the first image model, taking the second transformation matrix as the first transformation matrix, and returning to perform the step of adjusting, based on the first transformation matrix, the first image model to obtain the second image model.

In an embodiment, when the computer program is executed by a processor, the following steps are further implemented: registering a registration point set on a surface of the first image model with the first registration point set to obtain the first transformation matrix.

In an embodiment, when the computer program is executed by a processor, the following steps are further implemented: obtaining a template image model, a surface of the template image model having a template point set; and matching the template image model with the first image model to project the template point set to the surface of the first image model to obtain the registration point set on the surface of the first image model.

In an embodiment, a computer program product is provided, including a computer program. When the computer program is executed by a processor, the following steps are implemented: obtaining a first image model of an object to be registered used in a previous registration and a first transformation matrix obtained in the previous registration; for a current registration, adjusting, based on the first transformation matrix, the first image model to obtain a second image model; projecting a first registration point set on a surface of the object to be registered onto a surface of the second image model to obtain a projection point set; and registering the first registration point set with the projection point set to obtain a second transformation matrix.

In an embodiment, projection points in the projection point set are projection points having closest distances to corresponding registration points in the first registration point set respectively.

In an embodiment, when the computer program is executed by a processor, the following steps are further implemented: substituting the pose coordinates of the registration points in the first registration point set and the pose coordinates of the projection points in the projection point set as known quantities into a first objective function, and substituting the second transformation matrix as an unknown quantity into the first objective function, to solve the second transformation matrix. An optimization objective of the first objective function is to minimize a pose difference between a first transformation point set and the first registration point set, and the first transformation point set is obtained by transforming the projection point set based on the second transformation matrix.

In an embodiment, when the computer program is executed by a processor, the following steps are further implemented: obtaining registration weights corresponding to respective registration points in the first registration point set; for each registration point in the first registration point set, the registration weight being obtained based on at least one of the registration number of the current registration, a preset registration number, and a pose difference between the registration point and a projection point corresponding to the registration point; and substituting the registration weights corresponding to the registration points in the first registration point set, pose coordinates of the registration points in the first registration point set and pose coordinates of respective projection points in the projection point set as known quantities into a second objective function, and substituting the second transformation matrix as an unknown quantity into the second objective function, to solve the second transformation matrix.

In an embodiment, when the computer program is executed by a processor, the following steps are further implemented: determining whether the registration number of the current registration reaches a first iteration number threshold; and if the registration number of the current registration does not reach the first iteration number threshold, taking the second image model as the first image model, taking the second transformation matrix as the first transformation matrix, and returning to perform the step of adjusting, based on the first transformation matrix, the first image model to obtain the second image model.

In an embodiment, when the computer program is executed by a processor, the following steps are further implemented: if the registration number of the current registration reaches the first iteration number threshold, taking the second image model as the first image model, taking the second transformation matrix as the first transformation matrix, taking a second registration point set on the surface of the object to be registered as the first registration point set, and returning to perform the step of adjusting, based on the first transformation matrix, the first image model to obtain the second image model, until the registration number of the current registration reaches a second iteration number threshold. Respective registration points in the second registration point set are points other than the physiological and anatomical feature points on the surface of the object to be registered.

In an embodiment, when the computer program is executed by a processor, the following steps are further implemented: determining whether the registration number of the current registration reaches a third iteration number threshold; and if the registration number of the current registration does not reach the third iteration number threshold, taking the second image model as the first image model, taking the second transformation matrix as the first transformation matrix, and returning to perform the step of adjusting, based on the first transformation matrix, the first image model to obtain the second image model.

In an embodiment, when the computer program is executed by a processor, the following steps are further implemented: registering a registration point set on a surface of the first image model with the first registration point set to obtain the first transformation matrix.

In an embodiment, when the computer program is executed by a processor, the following steps are further implemented: obtaining a template image model, a surface of the template image model having a template point set; and matching the template image model with the first image model to project the template point set to the surface of the first image model to obtain the registration point set on the surface of the first image model.

A person of ordinary skill in the art may understand that implementation of all or part of the processes in the methods of the above embodiments may be completed by instructing the relevant hardware through a computer program. The computer program may be stored in a non-transitory computer-readable storage medium. When the computer program is executed, it may include the processes of the embodiments of the above methods. Any reference to memory, database or other medium used of the embodiments provided in the present disclosure may include at least one of a non-transitory and a transitory memory. The non-transitory memory may include a read-only memory (ROM), a magnetic tape, a floppy disk, a flash memory, an optical memory, a high-density embedded non-transitory memory, a resistive random-access memory (ReRAM), a magneto resistive random-access memory (MRAM), a ferroelectric random-access memory (FRAM), a phase change memory (PCM), or a graphene memory, etc. The transitory memory may include a random-access memory (RAM) or an external cache memory, etc. As an illustration rather than a limitation, the random-access memory may be in various forms, such as a static random-access memory (SRAM) or a dynamic random-access memory (DRAM), etc. The databases involved of the embodiments provided by the present disclosure may include at least one of a relational database and a non-relational database. The non-relational database may include, but is not limited to, a blockchain-based distributed database, etc. The processor involved of the embodiments provided by the present disclosure may be, but is not limited to, a general purpose processor, a central processor, a graphics processor, a digital signal processor, a programmable logic device, a data processing logic device based on quantum computation, and the like.

The technical features in the above embodiments may be combined arbitrarily. For concise description, not all possible combinations of the technical features in the above embodiments are described. However, provided that they do not conflict with each other, all combinations of the technical features are to be considered to be within the scope described in this specification.

The above-mentioned embodiments only describe several implementations of the present disclosure, and their description is specific and detailed, but should not be understood as a limitation on the patent scope of the present disclosure. It should be noted that, for a person of ordinary skill in the art may further make variations and improvements without departing from the conception of the present disclosure, and these all fall within the protection scope of the present disclosure. Therefore, the protection scope of the present disclosure should be subject to the appended claims.

**Claims**

1. A registration method, comprising:

   obtaining a first image model of an object to be registered used in a previous registration and a first transformation matrix obtained in the previous registration;
   performing a current registration, comprising:

   adjusting, based on the first transformation matrix, the first image model to obtain a second image model;
   projecting a first registration point set on a surface of the object to be registered onto a surface of the second image model to obtain a projection point set; and
   registering the first registration point set with the projection point set to obtain a second transformation matrix.

2. The registration method according to claim 1, wherein projection points in the projection point set are projection points having closest distances to corresponding registration points in the first registration point set respectively.

3. The registration method according to claim 1, wherein registering the first registration point set with the projection point set to obtain the second transformation matrix comprises:
   determining, based on pose coordinates of respective registration points in the first registration point set and pose coordinates of respective projection points in the projection point set, the second transformation matrix.

4. The registration method according to claim 3, wherein determining, based on the pose coordinates of the registration points in the first registration point set and the pose coordinates of the projection points in the projection point set, the second transformation matrix comprises:

   substituting the pose coordinates of the registration points in the first registration point set and the pose coordinates of the projection points in the projection point set as known quantities into a first objective function, and substituting the second transformation matrix as an unknown quantity into the first objective function, to solve the second transformation matrix;
   wherein the first objective function is configured to minimize a pose difference between a first transformation point set and the first registration point set, and the first transformation point set is obtained by transforming the projection point set based on the second transformation matrix.

5. The registration method according to claim 1, wherein registering the first registration point set with the projection point set to obtain the second transformation matrix comprises:

   obtaining registration weights corresponding to respective registration points in the first registration point set; for each registration point in the first registration point set, the registration weight being obtained based on at least one of a registration number of the current registration, a preset registration number, and a pose difference between the registration point and a projection point corresponding to the registration point; and
   substituting the registration weights corresponding to the respective registration points in the first registration point set, pose coordinates of the registration points in the first registration point set, and pose coordinates of respective projection points in the projection point set as known quantities into a second objective function, and substituting the second transformation matrix as an unknown quantity into the second objective function, to solve the second transformation matrix; the second objective function being configured to minimize a pose difference between a first transformation point set and the first registration point set, and the first transformation point set being obtained by transforming the projection point set based on the second transformation matrix.

6. The registration method according to claim 1, wherein respective registration points in the first registration point set are physiological and anatomical feature points on the surface of the object to be registered, and after registering the first registration point set with the projection point set to obtain the second transformation matrix, the registration method further comprises:

   determining whether a registration number of the current registration reaches a first iteration number threshold; and
if the registration number of the current registration does not reach the first iteration number threshold, taking the second image model as the first image model, taking the second transformation matrix as the first transformation matrix, and returning to perform the step of adjusting, based on the first transformation matrix, the first image model to obtain the second image model.

7. The registration method according to claim 6, wherein the registration method further comprises:
if the registration number of the current registration reaches the first iteration number threshold, taking the second image model as the first image model, taking the second transformation matrix as the first transformation matrix, taking a second registration point set on the surface of the object to be registered as the first registration point set, and returning to perform the step of adjusting, based on the first transformation matrix, the first image model to obtain the second image model, until the registration number of the current registration reaches a second iteration number threshold; wherein respective registration points in the second registration point set are points other than the physiological and anatomical feature points on the surface of the object to be registered.

8. The registration method according to claim 1, wherein respective registration points in the first registration point set are points other than physiological and anatomical feature points on the surface of the object to be registered, and after registering the first registration point set with the projection point set to obtain the second transformation matrix, the registration method further comprises:

determining whether a registration number of the current registration reaches a third iteration number threshold; and
if the registration number of the current registration does not reach the third iteration number threshold, taking the second image model as the first image model, taking the second transformation matrix as the first transformation matrix, and returning to perform the step of adjusting, based on the first transformation matrix, the first image model to obtain the second image model.

9. The registration method according to claim 1, wherein obtaining the first transformation matrix obtained in the previous registration comprises:
registering a registration point set on a surface of the first image model with the first registration point set to obtain the first transformation matrix.

10. The registration method according to claim 9, wherein obtaining the registration point set on the surface of the first image model comprises:

obtaining a template image model, a surface of the template image model having a template point set; and
matching the template image model with the first image model to project the template point set to the surface of the first image model to obtain the registration point set on the surface of the first image model.

11. The registration method according to claim 1, further comprising:

determining whether the second transformation matrix obtained in the current registration reaches a preset transformation matrix threshold; and
if the second transformation matrix does not reach the preset transformation matrix threshold, taking the second image model as the first image model, taking the second transformation matrix as the first transformation matrix, and returning to perform the step of adjusting, based on the first transformation matrix, the first image model to obtain the second image model, until the second transformation matrix obtained in the current registration reaches the preset transformation matrix threshold.

12. The registration method according to claim 1, further comprising:
moving and rotating, based on an offset and a rotation angle in the second transformation matrix, the second image model to obtain a matched image model.

13. A registration apparatus, comprising:

an obtaining module configured to obtain a first image model of an object to be registered used in a previous registration and a first transformation matrix obtained in the previous registration;
an adjustment module configured to, for a current registration, adjust, based on the first transformation matrix, the first image model to obtain a second image model;
a projection module configured to project a first registration point set on a surface of the object to be registered onto a surface of the second image model to obtain a projection point set; and
a registration module configured to register the first registration point set with the projection point set to obtain a second transformation matrix.

**14.** A computer device comprising a memory and a processor, wherein the memory stores a computer program, and the processor, when executing the computer program, implements steps of the registration method of any one of claims 1 to 12.

**15.** A computer-readable storage medium having a computer program stored thereon, wherein when the computer program is executed by a processor, steps of the registration method of any one of claims 1 to 12 are implemented.

**16.** A computer program product comprising a computer program, wherein when the computer program is executed by a processor, steps of the registration method of any one of claims 1 to 12 are implemented.

FIG. 1

---

**200**

Obtain a first image model of an object to be registered used in a previous registration and a first transformation matrix obtained in the previous registration

↓

**210**

For a current registration, adjust, based on the first transformation matrix, the first image model to obtain a second image model

↓

**220**

Project a first registration point set on a surface of the object to be registered onto a surface of the second image model to obtain a projection point set

↓

**230**

Register the first registration point set with the projection point set to obtain a second transformation matrix

FIG. 2

---

**300**

Obtain registration weights corresponding to respective registration points in the first registration point set

↓

**310**

Substitute the registration weights corresponding to the registration points in the first registration point set, pose coordinates of the registration points in the first registration point set, and pose coordinates of respective projection points in the projection point set as known quantities into a second objective function, and substitute the second transformation matrix as an unknown quantity into the second objective function, to solve the second transformation matrix

FIG. 3

200

Obtain a first image model of an object to be registered used in a previous registration and a first transformation matrix obtained in the previous registration

210

For a current registration, adjust, based on the first transformation matrix, the first image model to obtain a second image model

220

Project a first registration point set on a surface of the object to be registered onto a surface of the second image model to obtain a projection point set

230

Register the first registration point set with the projection point set to obtain a second transformation matrix

400

Determine whether the registration number of the current registration reaches a first iteration number threshold

No

Yes

410

Take the second image model as the first image model, take the second transformation matrix as the first transformation matrix

420

Take the second image model as the first image model, take the second transformation matrix as the first transformation matrix, take a second registration point set on the surface of the object to be registered as the first registration point set, until the registration number of the current registration reaches a second iteration number threshold

FIG. 4

200

Obtain a first image model of an object to be registered used in a previous registration and a first transformation matrix obtained in the previous registration

210

For a current registration, adjust, based on the first transformation matrix, the first image model to obtain a second image model

220

Project a first registration point set on a surface of the object to be registered onto a surface of the second image model to obtain a projection point set

230

Register the first registration point set with the projection point set to obtain a second transformation matrix

500

Determine whether the registration number of the current registration reaches a third iteration number threshold

No

Yes

510

Take the second image model as the first image model, take the second transformation matrix as the first transformation matrix

End

FIG. 5

600

Obtain a template image model, a surface of the template image model has a template point set

610

Match the template image model with the first image model to project the template point set to the surface of the first image model, to obtain the registration point set on the surface of the first image model

FIG. 6

FIG. 7

FIG. 8

FIG. 9

101 Obtain a template image model, a surface of the template image model has a template point set

102 Match the template image model with the first image model to project the template point set to the surface of the first image model, to obtain the registration point set on the surface of the first image model

103 Select corresponding points on the surface of the object to be registered through the first sub-registration point set on the surface of the first image model to form a first registration point set, and select corresponding points on the surface of the object to be registered through the second sub-registration point set on the surface of the first image model to form a second registration point set

104 Register the sub-registration point set on the surface of the first image model with the first registration point set on the surface of the object to be registered to obtain a first transformation matrix

105 Adjust the first image model based on the first transformation matrix to obtain a second image model

106 Project the first registration point set on the surface of the object to be registered onto a surface of the second image model to obtain a first projection point set

107 Register the first registration point set with the first projection point set to obtain a second transformation matrix

108 Determine whether the registration number of the current registration reaches a first iteration number threshold

No

109 Take the second image model as the first image model, take the second transformation matrix as the first transformation matrix

Yes

110 Perform a next registration

111 For the next registration, adjust the first image model based on the second transformation matrix to obtain a third image model, and project the second registration point set on the surface of the object to be registered onto a surface of the third image model to obtain a second projection point set

112 Obtain registration weights corresponding to registration points in the second registration point set

113 Substitute the registration weights corresponding to the registration points in the second registration point set, pose coordinates of the registration points in the second registration point set, and pose coordinates of projection points in the second projection point set as known quantities into a second objective function, and substitute a third transformation matrix as an unknown quantity into the second objective function, so as to solve the third transformation matrix

114 Determine whether the registration number of the next registration reaches the second iteration number threshold

No

115 Take the third image model as the first image model, take the third transformation matrix as the second transformation matrix

Yes

End

FIG. 10

| 11 | 12 | 13 | 14 |
|---|---|---|---|
| Obtaining Module | Adjustment Module | Projection Module | Registration Module |

Registration Apparatus 10

FIG. 11

| Processor | Internal Memory | Operating System |
|---|---|---|
| | | Computer Program |
| | | Non-Transitory Storage Medium |

System Bus

Input/output Interface

| Communication Interface | Input Device | Display Unit |
|---|---|---|

Computer Device

FIG. 12

| | | |
|---|---|---|
| **INTERNATIONAL SEARCH REPORT** | International application No. | |
| | **PCT/CN2023/105062** | |

**A. CLASSIFICATION OF SUBJECT MATTER**

G06T7/33(2017.01)i

According to International Patent Classification (IPC) or to both national classification and IPC

**B. FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNABS, CNTXT, WOTXT, EPTXT, USTXT, VEN, CNKI, IEEE: 图像, 影像, 上一次, 前次, 前一次, 上次, 投影, 调整, 粗配准, 精配准, 二次配准, 再次配准, 初步配准, 细配准, 位姿, 平移, 旋转, 权重, 迭代, 阈值, 模板, image, picture, photo, projection, ICP, adjust, coarse w registration, fine w registration, secondary w registration, preliminary w registration, posture, translation, rotate, weight, iteration, threshold, plate

**C. DOCUMENTS CONSIDERED TO BE RELEVANT**

| Category* | Citation of document, with indication, where appropriate, of the relevant passages | Relevant to claim No. |
|---|---|---|
| X | CN 104778688 A (HUAWEI TECHNOLOGIES CO., LTD.) 15 July 2015 (2015-07-15) description, paragraphs 116-377 | 1-4, 6-9, 11-16 |
| Y | CN 104778688 A (HUAWEI TECHNOLOGIES CO., LTD.) 15 July 2015 (2015-07-15) description, paragraphs 116-377 | 5, 10 |
| Y | 王勇 等 (WANG, Yong et al.). "采用点云重心距离进行边界检测的点云数据配准 (Point Cloud Data Registration Based on Boundary Detection by the Center of Mass Distance Feature)" 小型微型计算机系统 (*Journal of Chinese Computer Systems*), Vol. 36, No. 9, 30 September 2015 (2015-09-30), pp. 2097-2099 | 5 |
| Y | CN 111414798 A (SHENYANG UNIVERSITY OF TECHNOLOGY) 14 July 2020 (2020-07-14) description, paragraphs 271-300 | 10 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 August 2023** | **08 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/105062**

## C. DOCUMENTS CONSIDERED TO BE RELEVANT

| Category* | Citation of document, with indication, where appropriate, of the relevant passages | Relevant to claim No. |
|---|---|---|
| A | CN 105844586 A (KONINKLIJKE PHILIPS N.V.) 10 August 2016 (2016-08-10)<br>entire document | 1-16 |
| A | CN 109559338 A (XI'AN JIAOTONG UNIVERSITY) 02 April 2019 (2019-04-02)<br>entire document | 1-16 |
| A | CN 109785374 A (BEIHANG UNIVERSITY) 21 May 2019 (2019-05-21)<br>entire document | 1-16 |
| A | CN 110363800 A (XI'AN JIAOTONG UNIVERSITY) 22 October 2019 (2019-10-22)<br>entire document | 1-16 |
| A | CN 110415281 A (SHENZHEN RESEARCH INSTITUTE OF XI'AN JIAOTONG UNIVERSITY) 05 November 2019 (2019-11-05)<br>entire document | 1-16 |
| A | CN 113160290 A (SHANGHAI UNITED IMAGING HEALTHCARE CO., LTD.) 23 July 2021 (2021-07-23)<br>entire document | 1-16 |
| A | CN 113205547 A (BEIJING CHANGMUGU MEDICAL TECHNOLOGY CO., LTD. et al.) 03 August 2021 (2021-08-03)<br>entire document | 1-16 |
| A | CN 114219717 A (HANGZHOU SANTAN MEDICAL TECHNOLOGY CO., LTD.) 22 March 2022 (2022-03-22)<br>entire document | 1-16 |
| A | CN 114529594 A (WUHAN UNITED IMAGING HEALTHCARE SURGICAL TECHNOLOGY CO., LTD.) 24 May 2022 (2022-05-24)<br>entire document | 1-16 |
| A | US 2008095422 A1 (SURI Jasjit S. et al.) 24 April 2008 (2008-04-24)<br>entire document | 1-16 |
| A | US 2016217576 A1 (KONINKLIJKE PHILIPS N. V.) 28 July 2016 (2016-07-28)<br>entire document | 1-16 |

Form PCT/ISA/210 (second sheet) (July 2022)

# EP 4 517 661 A1

International application No.

**PCT/CN2023/105062**

| Patent document cited in search report | | | Publication date (day/month/year) | Patent family member(s) | | | Publication date (day/month/year) |
|---|---|---|---|---|---|---|---|
| CN | 104778688 | A | 15 July 2015 | None | | | |
| CN | 111414798 | A | 14 July 2020 | None | | | |
| CN | 105844586 | A | 10 August 2016 | WO | 2009081297 | A2 | 02 July 2009 |
| | | | | EP | 2225723 | A2 | 13 August 2009 |
| | | | | US | 2010266220 | A1 | 21 October 2010 |
| | | | | IN | 201004262 | P4 | 26 November 2010 |
| | | | | CN | 101903908 | A | 01 December 2010 |
| | | | | JP | 2011508620 | A | 17 March 2011 |
| | | | | RU | 2010129960 | A | 27 January 2012 |
| CN | 109559338 | A | 02 April 2019 | None | | | |
| CN | 109785374 | A | 21 May 2019 | None | | | |
| CN | 110363800 | A | 22 October 2019 | None | | | |
| CN | 110415281 | A | 05 November 2019 | None | | | |
| CN | 113160290 | A | 23 July 2021 | None | | | |
| CN | 113205547 | A | 03 August 2021 | None | | | |
| CN | 114219717 | A | 22 March 2022 | None | | | |
| CN | 114529594 | A | 24 May 2022 | None | | | |
| US | 2008095422 | A1 | 24 April 2008 | None | | | |
| US | 2016217576 | A1 | 28 July 2016 | EP | 2932470 | A2 | 21 October 2015 |
| | | | | WO | 2015055599 | A2 | 23 April 2015 |
| | | | | JP | 2016512977 | A | 12 May 2016 |
| | | | | BR | 112015018561 | A2 | 18 July 2017 |
| | | | | RU | 2015138724 | A | 15 March 2017 |
| | | | | CN | 105074775 | A | 18 November 2015 |
| | | | | IN | 201504683 | P4 | 01 July 2016 |

**REFERENCES CITED IN THE DESCRIPTION**

**Patent documents cited in the description**

- CN 202210758534